# EUROPÄISCHE PATENTSCHRIFT

(11) **EP 2 701 955 B1**
(45) Veröffentlichungstag und Bekanntmachung des Hinweises auf die Patenterteilung: **14.06.2017**
(21) Anmeldenummer: 12714632.2
(22) Anmeldetag: 02.04.2012
(51) Int. Cl.: B60T 8/40, B60T 8/32

(54) **BREMSANLAGE FÜR KRAFTFAHRZEUGE UND VERFAHREN ZUM BETREIBEN DER BREMSANLAGE**
BRAKE SYSTEM FOR MOTOR VEHICLES AND METHOD FOR OPERATING THE BRAKE SYSTEM
INSTALLATION DE FREINAGE POUR VÉHICULES AUTOMOBILES ET PROCÉDÉ POUR FAIRE FONCTIONNER LE SYSTÈME DE FREINAGE

(30) Priorität: 28.04.2011 DE 102011017703; 21.02.2012 DE 102012202645
(43) Veröffentlichungstag der Anmeldung: 05.03.2014
(73) Patentinhaber: Continental Teves AG & Co. oHG, 60488 Frankfurt (DE)
(72) Erfinder: DRUMM, Stefan A., 55291 Saulheim (DE); LINKENBACH, Steffen, 65760 Eschborn (DE)
(86) Internationale Anmeldenummer: PCT/EP2012/055942
(87) Internationale Veröffentlichungsnummer: WO 2012/146461

(56) Entgegenhaltungen:
- WO-A1-2011/029812
- DE-A1- 19 905 660
- DE-A1-102008 010 528
- DE-A1-102008 015 241
- JP-A- 2008 100 588

## Beschreibung

Die vorliegende Erfindung betrifft eine Bremsanlage für Kraftfahrzeuge gemäß dem Oberbegriff von Anspruch 1.

Eine derartige Bremsanlage ist aus der WO 2011/029812 A1 bekannt. Als ein gravierender Nachteil der vorbekannten Bremsanlage wird die Tatsache empfunden, dass bei einem Ausfall der Ansteuerung oder des Antriebs der elektrisch steuerbaren Druckquelle die Funktion der Bremsanlage in der "Brake-by-Wire"-Betriebsart nicht verfügbar ist.

In der DE 10 2008 015 241 A1, der DE 10 2008 010 528 A1 und der JP 2008 100588 A werden Bremsanlagen mit einem Bremspedal-betätigbaren Hauptbremszylinder mit zwei Druckräumen, denen jeweils ein Absperrventil zugordnet ist, einem Einlass- und Auslassventil je Radbremse sowie zwei elektrisch steuerbaren Pumpen, deren Abgabevolumenströme zusammengeschaltet sind, beschrieben. Die DE 10 2008 015 241 A1 offenbart weiterhin, dass die Einlass- und Auslassventile zweier Radbremsen und das eine der beiden Absperrventile von einem ersten Prozessor angesteuert werden sowie die Einlass- und Auslassventile der anderen zwei Radbremsen und das andere Trennventil von einem zweiten Prozessor angesteuert werden, d.h. die Ventile sind den zwei Prozessoren bremskreisweise zugeordnet. Weiterhin steuert der erste Prozessor die erste Pumpe und der zweite Prozessor die zweite Pumpe an.

Es ist Aufgabe der vorliegenden Erfindung, eine Bremsanlage der eingangs genannten Art dahingehend zu verbessern, dass die Verfügbarkeit der "Brake-by-wire"-Betriebsart erhöht wird.

Diese Aufgabe wird erfindungsgemäß durch die im Anspruch 1 angegebenen technischen Merkmale gelöst.

Die Erfindung betrifft auch ein Verfahren gemäß Anspruch 8.

Bevorzugt ist der Druckanschluss der zweiten elektrisch steuerbaren Druckquelle, insbesondere der Pumpe, an eine die Zuschaltventile speisende (Brems)Systemdruckleitung angeschlossen. Der Druckanschluss der zweiten elektrisch steuerbaren Druckquelle ist somit mit der hydraulischen Verbindungsleitung zwischen der ersten elektrisch steuerbaren Druckquelle und den Zuschaltventilen verbunden. Weitere vorteilhafte Weiterbildungen des Erfindungsgegenstandes sind in den Unteransprüchen angegeben.

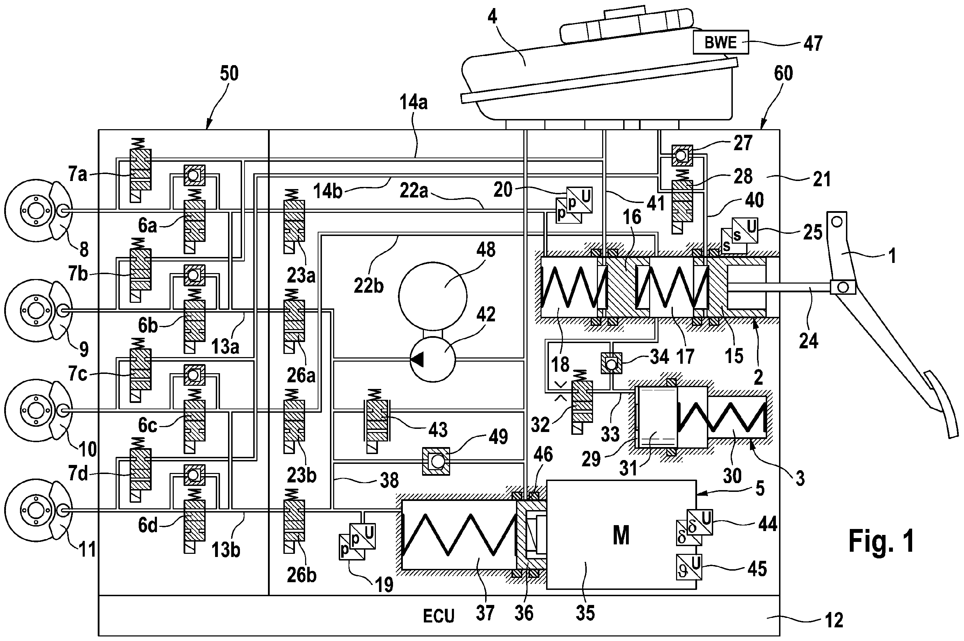

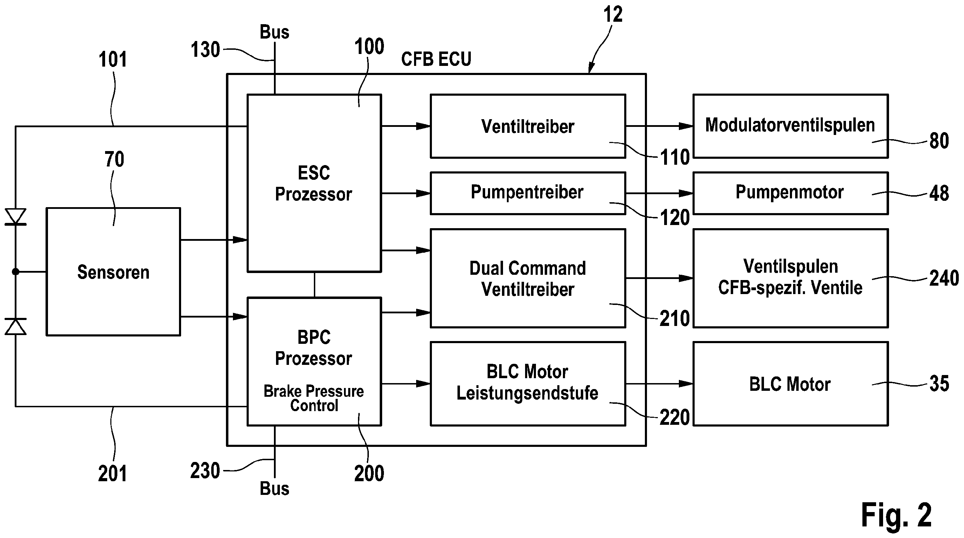

Die vorliegende Erfindung wird in der folgenden Beschreibung im Zusammenhang mit der beiliegenden schematischen Zeichnung an einem Ausführungsbeispiel näher erläutert. Dabei zeigt Fig. 1 der Zeichnung ein hydraulisches Schaltbild einer beispielsgemäßen Bremsanlage, während Fig. 2 den Aufbau der elektronischen Steuer- und Regeleinheit darstellt.

Die in der Zeichnung dargestellte Bremsanlage besteht im Wesentlichen aus einer mittels eines Betätigungs- bzw. Bremspedals 1 betätigbaren hydraulischen Betätigungseinheit 2, einem mit der hydraulischen Betätigungseinheit 2 zusammen wirkenden Wegsimulator 3, einem der hydraulischen Betätigungseinheit 2 zugeordneten Druckmittelvorratsbehälter 4 mit einem elektrischen Füllstandssensor 47, einer ersten elektrisch steuerbaren Druckquelle 5, elektrisch steuerbaren Druckmodulations- bzw. Einlass- und Auslassventilen 6a-6d, 7a-7d, die paarweise über Mittenanschlüsse hydraulisch zusammengeschaltet und an Radbremsen 8, 9, 10, 11 eines nicht dargestellten Kraftfahrzeuges angeschlossen sind. Die Eingangsanschlüsse der Einlassventile 6a-6d werden mittels Bremskreisdruckleitungen 13a, 13b mit Drücken versorgt, die in der "Brake-by-Wire"-Betriebsart aus einem (Brems)Systemdruck abgeleitet werden, der in einer an einen Druckraum 37 der ersten elektrisch steuerbaren Druckquelle 5 angeschlossenen (Brems)Systemdruckleitung 38 vorliegt und in der Rückfallbetriebsart mit den Drücken der Hauptbremszylinderkammern 17, 18 beaufschlagt werden, während die Ausgangsanschlüsse der Auslassventile 7a-7d paarweise über Rücklaufleitungen 14a, 14b mit dem Druckmittelvorratsbehälter 4 verbunden sind. Zum Erfassen des in der Systemdruckleitung 38 herrschenden Druckes ist ein vorzugsweise redundant ausgeführter Drucksensor 19 vorgesehen.

Die vorhin genannten Komponenten 6a-6d, 7a-7d, 13a, 13b, 14a, 14b werden zu einem elektrohydraulischen Modul zusammen gefasst und bilden somit eine Druckmodulationseinheit, die mit dem Bezugszeichen 50 versehen ist.

Wie außerdem in Fig. 1 dargestellt ist, weist die hydraulische Betätigungseinheit 2 der erfindungsgemäßen Bremsanlage in einem Gehäuse 21 zwei hintereinander angeordnete hydraulische Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 40, 41 mit dem Druckmittelvorratsbehälter 4 in Verbindung, wobei diese durch eine Relativbewegung der Kolben 17, 18 im Gehäuse 21 absperrbar sind, und andererseits mittels hydraulischer Leitungen 22a, 22b mit den bereits genannten Bremskreisdruckleitungen 13a, 13b in Verbindung, über die die Druckmodulationseinheit 50 an die Betätigungseinheit 2 angeschlossen ist. Dabei ist in der Druckausgleichsleitung 40 eine Parallelschaltung eines stromlos offenen (SO-) Diagnoseventils 28 mit einem zum Druckmittelvorratsbehälter 4 hin schließenden Rückschlagventil 27 enthalten. Die an die Hauptzylinderdruckräume 17, 18 angeschlossenen Leitungsabschnitte 22a, 22b sind über je ein Trennventil 23a, 23b, die als je ein elektrisch betätigbares, vorzugsweise stromlos offenes (SO-), 2/2-Wegeventil ausgebildet sind, mit den Bremskreisdruckleitungen 13a, 13b verbunden. Ein an den Leitungsabschnitt 22a angeschlossener Drucksensor 20 erfasst den im Druckraum 18 durch ein Verschieben des zweiten Kolbens 16 aufgebauten Druck. Außerdem nehmen die Druckräume 17, 18 nicht näher bezeichnete Rückstellfedern auf, die die Kolben 15, 16 bei unbetätigtem Hauptbremszylinder in einer Ausgangslage positionieren. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

Außerdem ist aus der zeichnerischen Darstellung der erfindungsgemäßen Bremsanlage ersichtlich, dass der zuvor genannte Wegsimulator 3 hydraulisch an den Hauptbremszylinder 2 angekoppelt ist und beispielsweise als eine eigenständige Baugruppe ausgebildet ist, die im Wesentlichen aus einer Simulatorkammer 29, einer Simulatorfederkammer 30 sowie einem die beiden Kammern 29, 30 voneinander trennenden Simulatorkolben 31 besteht. Dabei ist die Simulatorkammer 29 mittels eines elektrisch betätigbaren Simulator-Freigabeventils 32 mit dem ersten Druckraum 17 des Tandemhauptzylinders 2 verbindbar. Bei Vorgabe einer Pedalkraft und aktiviertem Simulator-Freigabeventil 32 strömt Druckmittel vom Hauptbremszylinder-Druckraum 17 in die Simulatorkammer 29. Das dabei generierte Pedalgefühl hängt von dem im Wegsimulator aufgebauten Gegendruck und von den Drosseleigenschaften des aktivierten Simulator-Freigabeventils 32 ab. Ein hydraulisch antiparallel zum Simulatorfreigabeventil 32 angeordnetes Rückschlagventil 34 ermöglicht unabhängig vom Schaltzustand des Simulator-Freigabeventils 32 und unabhängig von dessen Drosselwirkung ein weitgehend ungehindertes Zurückströmen des Druckmittels von der Simulatorkammer 29 zum Hauptbremszylinder-Druckraum 17. Das daraus resultierende ungedämpfte Lösen des Bremspedals wird als angenehm empfunden. Ohne diese Funktion könnte der Eindruck so genannter "klebender" Bremsen entstehen. Dabei ist ein hydraulischer Anschluss 33 an einer Stelle der Simulatorkammer 29 angebracht, an der sich eventuell vorhandene Gasblasen sammeln, so dass diese beim Lösen des Bremspedals mit der Druckmittelströmung über das Rückschlagventil 34 in die Hauptbremszylinderdruckräume transportiert werden, von wo sie über die Druckausgleichsleitung 40 in den Druckmittelvorratsbehälter 4 ausgestoßen werden können.

Schließlich ist in der Zeichnung erkennbar, dass die erste elektrisch steuerbare Druckquelle 5 als eine hydraulische Zylinder-Kolben-Anordnung bzw. ein einkreisiger elektrohydraulischer Aktuator ausgebildet ist, dessen Kolben 36 von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor 45 zum Sensieren der Temperatur der Motorwicklung verwendet werden. Der Kolben 36 begrenzt einen Druckraum 37. Zur Abdichtung des Spalts zwischen Kolben 36 und Druckraumwandung dient ein Elastomerdichtring, der in einer Nut auf dem Kolben 36 oder aber wie dargestellt - bei Verwendung eines Plungerkolbens - in einer Nut der Wandung angeordnet ist. Das Plungerprinzip erlaubt die Anordnung eines mit dem Druckmittelvorratsbehälter 4 verbundenen Schmierungsanschlusses 46. Dadurch werden die beiden Aufgaben des Dichtpakets, Abdichten gegen ein Druckgefälle und Abdichten eines luftgefüllten Raumes gegen einen druckmittelgefüllten Raum mit gleichem Druck, auf zwei Elastomerdichtringe verteilt, wobei beide auf ihre spezielle Aufgabe hin optimierbar sind.

Erfindungsgemäß ist eine zweite elektronisch steuerbare Druckquelle vorgesehen, die beispielsgemäß durch eine von einem Elektromotor 48 angetriebene Pumpe 42 gebildet ist. Beide elektronisch steuerbare Druckquellen speisen das von ihnen abgegebene Druckmittel in die Systemdruckleitung 38 ein, so dass trotz eines möglichen Ausfalls einer der Druckquellen ein elektronisch gesteuerter Systemdruckaufbau weiterhin erfolgt. Von besonderem Vorteil ist dabei, dass die beiden Druckquellen technisch unterschiedlich realisiert sind. Der elektrohydraulische Aktuator 5 arbeitet besonders dynamisch, sehr leise und verträgt problemlos die für Bremssysteme erforderlichen Lastwechselzahlen. Er wird für die meisten Bremsungen verwendet. Das Motor-PumpenAggregat 42, 48 ist vorzugsweise vom Typ einer vom Elektromotor 48 über einen Exzenter angetriebenen Kolbenpumpe 42 ausgebildet, einer Bauform, die in bekannten Bremssystemen als Rückförderpumpe bereits millionenfach eingesetzt wird. Diese kann besonders hohe Systemdrücke erzeugen und kann in sehr kompakter Baugröße realisiert werden. Im Gegensatz zum elektrohydraulischen Aktuator 5 ist das vom Motor-PumpenAggregat 42, 48 abgebbare Druckmittelvolumen nicht erschöpfbar, weil die Pumpe 42 aus dem Druckmittelvorratsbehälter 4 ansaugt.

Der durch die Kraftwirkung des Kolbens 36 auf das im Druckraum 37 eingeschlossene Druckmittel erzeugte Aktuatordruck wird in die Systemdruckleitung 38 eingespeist und mit dem Systemdrucksensor 19 erfasst. Wie bereits erwähnt, ist die Abdichtung des Kolbens 36 im Zylinder des Aktuators 5 vorzugsweise mit zwei Elastomerdichtringen realisiert, wobei ein mit dem Druckmittelvorratsbehälter 4 verbundener Anschluss 46 für eine antriebsseitige Benetzung des Druck tragenden und eine hydraulikseitige Benetzung des medientrennenden Elastomerdichtrings sorgt. In der "Brake-by-Wire"-Betriebsart wird die Systemdruckleitung 38 über die Zuschaltventile 26a, 26b mit den Bremskreisdruckleitungen 13a, 13b verbunden. Auf diesem Weg erfolgt bei einer Normalbremsung ein Radbremsdruckauf- und -abbau für alle Radbremsen 8, 9, 10, 11. Beim Druckabbau strömt dabei das vorher aus dem Druckraum 37 des Aktuators 5 in die Radbremsen verschobene Druckmittel auf dem gleichen Wege wieder in den Druckraum 37 des Aktuators 5 zurück. Dagegen strömt bei einer Bremsung mit radindividuell unterschiedlich, mit Hilfe der Modulationsventile geregelten Radbremsdrücken der über die Auslassventile 7a-d abgelassene Druckmittelanteil in den Druckmittelvorratsbehälter 4. Bei einer über einen längeren Zeitraum andauernden Bremsung mit Radbremsdruckmodulation muss daher das Druckmittelvolumen im Akuatordruckraum 37 wieder aus dem Druckmittelvorratsbehälter 4 aufgefüllt werden. Hierfür stehen verschiedene Druckmittelpfade bereit. Der bevorzugte Pfad führt über die Pumpe 42. Wird diese über den Elektromotor 48 angetrieben, fördert sie Druckmittel aus dem Druckmittelvorratsbehälter 4 in die Systemdruckleitung 38, die zum Bremsdruckaufbau zur Verfügung steht. Zu viel gefördertes Volumen wird über das Elektromagnetventil 43 wieder abgelassen. Das im Stand der Technik erforderliche Nachsaugen von Druckmittel aus dem Druckmittelvorratsbehälter 4 durch ein Zurückfahren des Aktuatorkolbens 36, das mit einer unerwünschten, aber im Stand der Technik unvermeidbaren Unterbrechung der Systemdruckbereitstellung einhergeht, entfällt. Lediglich für den Fall eines möglichen Ausfalls der zweiten elektrisch steuerbaren Druckquelle muss auf den Nachsaugprozess zurückgegriffen werden. Dieses Nachsaugen erfolgt über weitere Hydraulikpfade: Bei einem Zurückfahren des Kolbens 36 bei geschlossenen Zuschaltventilen 26a, 26b strömt Druckmittel aus dem Behälter 4 über ein als in Strömungsrichtung zum Aktuator öffnendes Rückschlagventil ausgebildetes Nachsaugventil 49 in den Akuatordruckraum 37. Parallel dazu kann der den Aktuatordruck tragende Elastomerdichtring als Lippendichtring ausgebildet werden, der bei Vorliegen einer negativen Druckdifferenz keine Dichtwirkung besitzt und somit einen zweiten Ansaugpfad öffnet. Schließlich kann als Pumpe 42 ein Verdränger-Pumpentyp mit druckbetätigten Ventilen gewählt werden, welcher Volumenströme in Druckaufbaurichtung praktisch ungehindert durchlässt.

Die vorhin genannten Komponenten 2, 3, 5, 19, 20, 22a, 22b, 23a, 23b, 26a, 26b, 27, 28, 32, 33, 34, 40, 41, 42, 43, 46, 48, 49 können zu einem zweiten elektrohydraulischen Modul zusammen gefasst werden, das mit dem Bezugszeichen 60 versehen ist. Der Ansteuerung sämtlicher elektrisch betätigbaren Komponenten der erfindungsgemäßen Bremsanlage dient eine elektronische Steuer- und Regeleinheit 12.

Wie insbesondere Fig. 2 zu entnehmen ist, ist die im Zusammenhang mit Fig. 1 erwähnte elektronische Steuer- und Regeleinheit 12 elektrisch zweikreisig ausgeführt und weist im Wesentlichen einen dem ersten elektrischen Kreis zugeordneten, ersten Prozessor 100 sowie einen dem zweiten elektrischen Kreis zugeordneten, zweiten Prozessor 200 auf, denen als Eingangsgrößen beispielsgemäß die Ausgangssignale der vorhin erwähnten Sensoren 19, 20, 25, 44, 45 zugeführt werden, die in Fig. 2 schematisch als ein Gesamtblock 70 dargestellt sind. Die Sensoren 70 weisen eine elektrische Energieversorgung auf, die aus beiden elektrischen Kreisen (siehe Leitungen 101, 201) redundant gespeist wird. Der erste Kreis umfasst außerdem eine Ventiltreiberbaugruppe 110 für die Druckmodulationsventile 6a-6d, 7a-7d der Druckmodulationseinheit 50 sowie einen Pumpentreiber 120 zum Ansteuern des die Pumpe 42 antreibenden, in Fig. 1 mit dem Bezugszeichen 48 versehenen Elektromotors. Die Elektromagnetspulen der Druckmodulationsventile werden in Fig. 2 als ein zweiter Gesamtblock 80 dargestellt, während der Elektromotor als einzelnes Blocksymbol 48 dargestellt ist. Der zweite elektrische Kreis umfasst außer dem zweiten Prozessor 200 eine zweite Ventiltreiberbaugruppe 210 zur Ansteuerung der Trennventile 23a, 23b, der Zuschaltventile 26a, 26b, des Simulator-Freigabeventils 32 und des Diagnoseventils 28 sowie eine Leistungsendstufe 220 zum Ansteuern des elektrischen Antriebs 35 der ersten elektrisch steuerbaren Druckquelle 5. Die Elektromagnetspulen der Trennventile 23a, 23b, der Zuschaltventile 26a, 26b, des Simulator-Freigabeventils 32 und des Diagnoseventils 28 werden durch einen weiteren Block 240 dargestellt.

Außerdem ist aus der zeichnerischen Darstellung der beispielsgemäßen Steuer- und Regeleinheit ersichtlich, dass die zweite Ventiltreiberbaugruppe 210 zusätzlich zur Ansteuerbarkeit vom zweiten Prozessor 200 vom ersten Prozessor 100 ansteuerbar ist. Eine Verbindung der beiden Prozessoren 100, 200 mit einem nicht dargestellten Kommunikationssystem des Kraftfahrzeuges wird schließlich durch je einen Bus 130, 230 angedeutet.

Die Funktionsweise der erfindungsgemäßen Bremsanlage sowohl in der bevorzugten "Brake-by-wire"-Betriebsart als auch in der sog. Rückfallbetriebsart ergibt sich für den auf dem einschlägigen technischen Gebiet tätigen Fachmann aus dem Offenbarungsgehalt der vorliegenden Patentanmeldung und braucht deswegen nicht näher erläutert zu werden.

## Patentansprüche

1. Bremsanlage für Kraftfahrzeuge, die in einer "Brake-by-Wire"-Betriebsart sowohl vom Fahrzeugführer als auch unabhängig vom Fahrzeugführer ansteuerbar ist, vorzugsweise in der "Brake-by-Wire"-Betriebsart betrieben wird und in mindestens einer Rückfallbetriebsart betrieben werden kann, in der nur der Betrieb durch den Fahrzeugführer möglich ist, mit
a) einem Bremspedal (1) zum Betätigen eines Hauptbremszylinders (2) mit einem Gehäuse (21), zwei hintereinander angeordneten Kolben (15, 16), die im Gehäuse (21) zwei Druckräume (17, 18) begrenzen, auf die bei der Betätigung der Bremsanlage durch den Fahrzeugführer eine Betätigungskraft ausgeübt wird und die bei unbetätigtem Bremspedal (1) von Rückstellfedern in eine Ausgangsstellung positioniert werden,
b) einem unter Atmosphärendruck stehenden Druckmittelvorratsbehälter (4) mit wenigstens zwei, den Druckräumen (17, 18) zugeordneten Kammern,
c) einer Wegerfassungseinrichtung (25), die den Betätigungsweg des Bremspedals (1) oder eines mit dem Bremspedal (1) verbundenen Kolbens (15) erfasst,
d) einem Drucksensor (20) zum Erfassen eines im Hauptbremszylinder durch die Betätigungskraft hervor gerufenen hydraulischen Druckes,
e) einem Wegsimulator (3) mit einem Simulatorfreigabeventil (32), der in der "Brake-by-wire"-Betriebsart dem Fahrzeugführer das gewohnte Bremspedalgefühl vermittelt, wobei er mit einem der Druckräume (17) in hydraulischer Verbindung steht und dessen Wirkung in der Rückfallbetriebsart abschaltbar ist,
f) einer ersten elektrisch steuerbaren Druckquelle (5), die einen Bremssystemdruck abgibt,
g) einem zweiten Drucksensor (19) zum Erfassen des Bremssystemdruckes,
h) einer Druckmodulationseinheit (50), die pro Radbremse (8, 9, 10, 11) ein Einlassventil (6a-6d) sowie ein Auslassventil (7a-7d) zum Einstellen radindividueller Bremsdrücke aufweist, die aus dem Bremssystemdruck abgeleitet werden, wobei im nicht angesteuerten Zustand die Einlassventile (6a-6d) den Bremssystemdruck zu den Radbremsen (8, 9, 10, 11) weiterleiten und die Auslassventile (7a-7d) ein Abströmen von Druckmittel aus den Radbremsen (8, 9, 10, 11) sperren,
i) Trennventilen (23a, 23b) zum Trennen der Hauptbremszylinder-Druckräume (17, 18) von der Druckmodulationseinheit (50),
j) Zuschaltventilen (26a, 26b) zur hydraulischen Verbindung der ersten elektrisch steuerbaren Druckquelle (5) mit der Druckmodulationseinheit (50), sowie
k) einer elektronischen Steuer- und Regeleinheit (12),
**dadurch gekennzeichnet, dass**
eine zweite elektrisch steuerbare Druckquelle (42) vorgesehen ist, deren Abgabevolumenstrom mit dem der ersten elektrisch steuerbaren Druckquelle (5) zusammen geschaltet ist, und dass die elektronische Steuer- und Regeleinheit (12) elektrisch zweikreisig ausgeführt ist, wobei der erste Kreis einen ersten Prozessor (100), eine Ventiltreiberbaugruppe (110) für die Druckmodulationsventile (6a-6d, 7a-7d) der Druckmodulationseinheit (50) sowie einen Pumpentreiber (120) für die zweite elektrisch steuerbare Druckquelle (42) umfasst, und wobei der zweite Kreis einen zweiten Prozessor (200), eine zweite Ventiltreiberbaugruppe (210), mittels welcher die Trennventile (23a, 23b) und die Zuschaltventile (26a, 26b) betätigbar sind, sowie eine Leistungsendstufe (220) zum Ansteuern des elektrischen Antriebs (35) der ersten elektrisch steuerbaren Druckquelle (5) umfasst, wobei die zweite Ventiltreiberbaugruppe (210) zusätzlich zur Ansteuerbarkeit vom zweiten Prozessor (200) vom ersten Prozessor (100) ansteuerbar ist.

2. Bremsanlage nach Anspruch 1, **dadurch gekennzeichnet, dass** der Druckanschluss der zweiten elektrisch steuerbaren Druckquelle mit einer die Zuschaltventile speisenden Systemdruckleitung verbunden ist.

3. Bremsanlage nach Anspruch 1 oder 2, **dadurch gekennzeichnet, dass** die zweite elektrisch steuerbare Druckquelle als eine von einem Elektromotor (48) angetriebene hydraulische Pumpe (42) ausgebildet ist.

4. Bremsanlage nach Anspruch 3, **dadurch gekennzeichnet, dass** der Sauganschluss der Pumpe (42) an den Druckmittelvorratsbehälter (4) angeschlossen ist.

5. Bremsanlage nach einem der Ansprüche 1 bis 4, **dadurch gekennzeichnet, dass** die Drucksensoren (19, 20) sowie die Wegerfassungseinrichtung (25) eine elektrische Energieversorgung aufweisen, die aus beiden elektrischen Kreisen gespeist wird (101, 201).

6. Bremsanlage nach Anspruch 5, **dadurch gekennzeichnet, dass** die Drucksensoren (19, 20) sowie die Wegerfassungseinrichtung (25) Signale erzeugen, die dem ersten (100) sowie dem zweiten Prozessor (200) zugeführt werden.

7. Bremsanlage nach einem der Ansprüche 1 bis 6, **dadurch gekennzeichnet, dass** sowohl der erste (100) als auch der zweite Prozessor (200) mit mindestens einem Fahrzeugkommunikationssystem verbunden sind (130, 230).

8. Verfahren zum Betrieb einer Bremsanlage nach einem der Ansprüche 3 bis 7, wenn abhängig von Anspruch 2 und 3, **dadurch gekennzeichnet, dass** während einer Antiblockierschutz-Betriebsart das bei einem Druckabbau von der Druckmodulationseinheit (50) an den Druckmittelvorratsbehälter (4) abgegebene Druckmittelvolumen mit Hilfe der Pumpe (42) der die Zuschaltventile (26a, 26b) speisenden Systemdruckleitung (38) zur Verfügung gestellt wird.

9. Verfahren nach Anspruch 8, **dadurch gekennzeichnet, dass** bei nicht funktionsfähiger erster elektrisch steuerbarer Druckquelle (5) der Systembremsdruck von der Pumpe (42) alleine bereit gestellt wird.

10. Verfahren nach Anspruch 8 oder 9, **dadurch gekennzeichnet, dass** bei einem Ausfall des zweiten Prozessors (200) der Systembremsdruck mit Hilfe der Pumpe (42) bereit gestellt wird.

## Claims

1. Brake system for motor vehicles, which can be controlled in a "brake-by-wire" operating mode both by the driver of the vehicle and also independently of the driver of the vehicle, said brake system is preferably operated in the "brake by wire" operating mode and can be operated in at least one fallback operating mode, in which only the operation by the driver of the vehicle is possible, having:
a) a brake pedal (1) for the purpose of actuating a master brake cylinder (2) having a housing (21), two pistons (15, 16) that are arranged one behind the other, which pistons limit two pressure chambers (17, 18) in the housing (21), upon which pistons an actuating force is exerted during actuation of the brake system by the driver of the vehicle and said pistons are positioned in a starting position by return springs in the case of the brake pedal (1) not being actuated,
b) a pressure medium storage container (4) that is under atmospheric pressure and comprises at least two chambers that are allocated to the pressure chambers (17, 18),
c) a travel detecting device (25) that detects the actuation path of the brake pedal (1) or of a piston (15) that is connected to the brake pedal (1),
d) a pressure sensor (20) for the purpose of detecting a hydraulic pressure that is built up in the master brake cylinder by way of the actuating force,
e) a travel simulator (3) having a simulator release valve (32) that conveys the conventional brake pedal sensation to the driver in the "brake-by-wire" operating mode, wherein said travel simulator is connected in a hydraulic manner to one of the pressure chambers (17) and the effect of said travel simulator can be interrupted in the fallback operating mode,
f) a first electrically controllable pressure source (5) that provides a brake system pressure,
g) a second pressure sensor (19) for the purpose of detecting the brake system pressure,
h) a pressure modulation unit (50) that comprises for each wheel brake (8, 9, 10, 11) an intake valve (6a-6d) and an exhaust valve (7a-7d) for the purpose of adjusting the brake pressures for individual wheels, which brake pressures are derived from the brake system pressure, wherein in the non-actuated state, the intake valves (6a-6d) pass the brake system pressure onto the wheel brakes (8, 9, 10, 11) and the exhaust valves (7a-7d) interrupt the flow of pressure medium from the wheel brakes (8, 9, 10, 11),
i) separating valves (23a, 23b) for the purpose of separating the master brake cylinder pressure chambers (17, 18) from the pressure modulation unit (50),
j) switching valves (26a, 26b) for the purpose of connecting the first electrically controllable pressure source (5) to the pressure modulation unit (50) in a hydraulic manner, and
k) an electronic control and regulation unit (12),
**characterized in that**
a second electrically controllable pressure source (42) is provided, whose output volume flow is connected together with that of the first electrically controllable pressure source (5), and **in that** the electronic control and regulation unit (12) is embodied in an electrical dual circuit manner, wherein the first circuit comprises a first processor (100), a valve driver assembly (110) for the pressure modulation valves (6a-6d, 7a-7d) of the pressure modulation unit (50), and also a pump driver (120) for the second electrically controllable pressure source (42), and wherein the second circuit comprises a second processor (200), a second valve driver assembly (210) by means of which the separation valves (23a, 23b) and the switching valves (26a, 26b) can be actuated, and also a power output stage (220) for the purpose of controlling the electrical drive (35) of the first electrically controllable pressure source (5), wherein the second valve driver assembly (210) can be controlled by the first processor (100) in addition to being able to be controlled by the second processor (200).

2. Brake system according to Claim 1, **characterized in that** the pressure connector of the second electrically controllable pressure source is connected to a system pressure line that supplies the switching valves.

3. Brake system according to Claim 1 or 2, **characterized in that** the second electrically controllable pressure source is embodied as a hydraulic pump (42) that is driven by an electric motor (48).

4. Brake system according to Claim 3, **characterized in that** the intake connector of the pump (42) is connected to the pressure medium storage container (4).

5. Brake system according to any one of Claims 1 to 4, **characterized in that** the pressure sensors (19, 20) and the travel detecting device (25) comprise an electrical energy supply that is supplied from the two electrical circuits (101, 201).

6. Brake system according to Claim 5, **characterized in that** the pressure sensors (19, 20) and the travel detecting device (25) generate signals that are supplied to the first processor (100) and to the second processor (200).

7. Brake system according to any one of Claims 1 to 6, **characterized in that** both the first processor (100) and also the second processor (200) are connected to at least one vehicle communication system (130, 230).

8. Method for operating a brake system according to any one of Claims 3 to 7, when dependent on Claim 2 and 3, **characterized in that** during an ABS brake operating mode the pressure medium volume that is supplied to the pressure medium storage container (4) as the pressure is reduced by the modulation unit (50) is made available with the aid of the pump (42) to the system pressure line (38) that supplies the switching valves (26a, 26b).

9. Method according to Claim 8, **characterized in that,** in the case of a first electrically controllable pressure source (5) that cannot function, the system brake pressure is provided by the pump (42) alone.

10. Method according to Claim 8 or 9, **characterized in that,** in the event of a failure of the second processor (200), the system brake pressure is provided with the aid of the pump (42).

## Revendications

1. Installation de freinage pour véhicules automobiles, qui peut être commandée aussi bien par le conducteur du véhicule qu'indépendamment du conducteur du véhicule selon un mode de fonctionnement "Brake-by-wire", de préférence qui fonctionne selon le mode de fonctionnement "Brake-by-wire" et qui peut fonctionner selon au moins un mode de fonctionnement de retour, dans lequel seul le fonctionnement commandé par le conducteur du véhicule est possible, avec
a) une pédale de frein (1) pour l'actionnement d'un maître-cylindre (2) avec un boîtier (21), deux pistons agencés l'un derrière l'autre (15, 16), qui limitent dans le boîtier (21) deux chambres de pression (17, 18), sur lesquels une force d'actionnement est exercée lors d'un actionnement de l'installation de freinage par le conducteur du véhicule et qui, lorsque la pédale de frein (1) n'est pas actionnée, sont positionnés dans une position initiale par des ressorts de rappel,
b) un réservoir de stockage (4) de fluide de pression se trouvant à la pression atmosphérique, avec au moins deux chambres associées aux chambres de pression (17, 18),
c) un dispositif de détection de course (25), qui détecte la course d'actionnement de la pédale de frein (1) ou d'un piston (15) relié à la pédale de frein (1),
d) un capteur de pression (20) pour détecter une pression hydraulique créée dans le maître-cylindre par la force d'actionnement,
e) un simulateur de course (3) avec une soupape de libération de simulateur (32), qui dans le mode de fonctionnement "Brake-by-wire" communique au conducteur du véhicule la sensation usuelle de la pédale de frein, dans lequel il est en liaison hydraulique avec une des chambres de pression (17) et dont l'action peut être interrompue dans le mode de fonctionnement de retour,
f) une première source de pression à commande électrique (5), qui délivre une pression du système de freinage,
g) un deuxième capteur de pression (19) pour détecter la pression du système de freinage,
h) une unité de modulation de la pression (50), qui présente par frein de roue (8, 9, 10, 11) une soupape d'entrée (6a-6d) ainsi qu'une soupape de sortie (7a-7d) pour le réglage des pressions de freinage individuelles des roues, qui sont dérivées de la pression du système de freinage, dans lequel à l'état non commandé les soupapes d'entrée (6a-6d) transmettent la pression du système de freinage aux freins de roue (8, 9, 10, 11) et les soupapes de sortie (7a-7d) bloquent l'écoulement de fluide de pression hors des freins de roue (8, 9, 10, 11),
i) des soupapes de séparation (23a, 23b) pour séparer les chambres de pression (17, 18) du maître-cylindre de l'unité de modulation de la pression (50),
j) des soupapes de connexion (26a, 26b) pour la liaison hydraulique de la première source de pression à commande électrique (5) à l'unité de modulation de la pression (50), ainsi que
k) une unité de commande et de régulation électronique (12),
**caractérisé en ce qu'**il est prévu une deuxième source de pression à commande électrique (42), dont le courant volumique de sortie est réuni à celui de la première source de pression à commande électrique (5), et **en ce que** l'unité de commande et de régulation électronique (12) est réalisée avec deux circuits électriques, dans lequel le premier circuit comprend un premier processeur (100), un groupe de commande de soupapes (110) pour les soupapes de modulation de la pression (6a-6d, 7a-7d) de l'unité de modulation de la pression (50) ainsi qu'un dispositif de commande de pompe (120) pour la deuxième source de pression à commande électrique (42), et dans lequel le deuxième circuit comprend un deuxième processeur (200), un deuxième groupe de commande de soupapes (210), au moyen duquel les soupapes de séparation (23a, 23b) et les soupapes de connexion (26a, 26b) peuvent être actionnées, ainsi qu'un étage final de puissance (220) pour commander l'entraînement électrique (35) de la première source de pression à commande électrique (5), dans lequel le deuxième groupe de commande de soupapes (210) peut en outre être commandé par le premier processeur (100) en plus de la possibilité de commande par le deuxième processeur (200).

2. Installation de freinage selon la revendication 1, **caractérisée en ce que** le raccord de pression de la deuxième source de pression à commande électrique est raccordé à une conduite de pression du système alimentant les soupapes de connexion.

3. Installation de freinage selon la revendication 1 ou 2, **caractérisée en ce que** la deuxième source de pression à commande électrique est réalisée sous la forme d'une pompe hydraulique (42) entraînée par un moteur électrique (48).

4. Installation de freinage selon la revendication 3, **caractérisée en ce que** le raccord d'aspiration de la pompe (42) est raccordé à un réservoir de stockage (4) de fluide de pression.

5. Installation de freinage selon l'une quelconque des revendications 1 à 4, **caractérisée en ce que** les capteurs de pression (19, 20) ainsi que le dispositif de détection de course (25) présentent une alimentation en énergie électrique, qui est alimentée par les deux circuits électriques (101, 201).

6. Installation de freinage selon la revendication 5, **caractérisée en ce que** les capteurs de pression (19, 20) ainsi que le dispositif de détection de course (25) produisent des signaux, qui sont envoyés au premier (100) ainsi qu'au deuxième (200) processeurs.

7. Installation de freinage selon l'une quelconque des revendications 1 à 6, **caractérisée en ce qu'**aussi bien le premier (100) que le deuxième (200) processeurs sont reliés à au moins un système de communication du véhicule (130, 230).

8. Procédé de fonctionnement d'une installation de freinage selon l'une quelconque des revendications 3 à 7, lorsqu'elle dépend de la revendication 2 et 3, **caractérisé en ce que** pendant un mode de fonctionnement de protection d'antiblocage le volume de fluide de pression délivré par l'unité de modulation de la pression (50) au réservoir de stockage de fluide de pression (4) lors d'une chute de pression est mis à la disposition, à l'aide de la pompe (42), de la conduite de pression du système (38) alimentant les soupapes de connexion (26a, 26b).

9. Procédé selon la revendication 8, **caractérisé en ce que** lorsque la première source de pression à commande électrique (5) n'est pas en état de fonctionner, on fournit la pression de freinage du système par la pompe (42) seule.

10. Procédé selon la revendication 8 ou 9, **caractérisé en ce que**, en cas de panne du deuxième processeur (200), on fournit la pression de freinage du système à l'aide de la pompe (42).
